# FASCICULE DE BREVET EUROPEEN

(11) **EP 3 426 862 B1**
(45) Date de publication et mention de la délivrance du brevet: **09.07.2025**
(21) Numéro de dépôt: 17713359.2
(22) Date de dépôt: 09.03.2017
(51) Int. Cl.: E04F 15/18, E04F 15/20, B32B 27/12, B32B 3/14, B32B 5/02, B32B 5/18, B32B 5/24, B32B 5/26, B32B 7/12, B32B 11/04, B32B 11/10, B32B 13/04, B32B 13/12, B32B 13/14, B32B 19/04, B32B 19/06, B32B 27/06, B32B 27/32

(54) **SYSTEME ÉTANCHE D'ISOLATION ACOUSTIQUE SOUS CARRELAGE**
VERSIEGELNDES SCHALLISOLIERENDES SYSTEM ZUR POSITIONIERUNG UNTER BODENFLIESEN
SEALING SOUNDPROOFING SYSTEM TO BE PLACED UNDER FLOOR TILES

(30) Priorité: 10.03.2016 FR 1652010
(43) Date de publication de la demande: 16.01.2019
(73) Titulaire: SAINT-GOBAIN WEBER, 94370 Sucy-en-Brie (FR)
(72) Inventeur: COMOY, Daniel, 01400 Condeissiat (FR); DONDE, Lionel, 01000 Bourg En Bresse (FR)
(74) Mandataire: Saint-Gobain Recherche
(86) Numéro de dépôt international: PCT/FR2017/050528
(87) Numéro de publication internationale: WO 2017/153688

(56) Documents cités:
- CH-A5- 692 510
- DE-A1- 10 201 867
- DE-A1- 4 441 646
- DE-U1- 8 621 064

## Description

La présente invention concerne un système étanche d'isolation acoustique sous forme de plaques destiné à être positionné sous un revêtement de sol de type carreaux de carrelage collés. L'invention concerne également un procédé de fabrication d'un sol carrelé utilisant ce système pour assurer à la fois l'isolation acoustique aux bruits d'impact et l'étanchéité.

Il est obligatoire en raison des normes en vigueur dans la construction neuve ou dans la réhabilitation de logements anciens de prévoir des solutions d'isolation acoustique permettant de diminuer la transmission des bruits d'impact au travers du sol. Il existe de nombreuses solutions pour satisfaire à ces exigences normalisées.

D'autre part, il est usuel, lorsqu'il est nécessaire de protéger les supports sensibles à l'eau, de prévoir un système d'étanchéité que l'on place sous le carrelage. Lorsqu'on recherche un système qui soit à la fois étanche à l'eau et qui réponde aux exigences d'isolation acoustique, les systèmes d'isolation phonique sous chape utilisés actuellement pour la pose de sols carrelés nécessitent la présence d'une chape rigide entre le système d'isolation acoustique et le système d'étanchéité. Ainsi, dans ces systèmes, on place sur le support à revêtir une couche acoustique fine d'épaisseur inférieure ou égale à 10 mm, puis on coule une chape dont l'épaisseur varie de 5 à 60 mm selon le système acoustique choisi. L'existence de cette chape est indispensable au bon fonctionnement du système d'isolation acoustique et permet d'avoir les conditions suffisantes en termes de rigidité mécanique et d'état de surface pour la pose du carrelage. Il est donc nécessaire de la laisser sécher avant de pouvoir continuer la pose. Après séchage de la chape, on place une membrane d'étanchéité qui peut se présenter soit sous la forme d'une feuille prête à poser et à coller sur le support, soit sous la forme d'un produit d'étanchéité liquide ou pâteux qu'il faut appliquer sur la chape et qui en séchant assurera la fonction d'étanchéité. Dans le cas d'un produit d'étanchéité liquide ou pâteux pour lequel plusieurs passes successives sont réalisées, il est par conséquent nécessaire là encore d'attendre que le produit sèche entre chaque passe avant de pouvoir poser les carreaux de carrelage. Dans tous les cas, la pose du carrelage est effectuée en appliquant sur la membrane d'étanchéité de la colle à carrelage puis directement les carreaux. Quelle que soit la solution choisie pour la membrane d'étanchéité, avec les systèmes actuels, le temps d'attente pour l'applicateur est incontournable en raison de l'application et du séchage de la chape.

Il est également connu le document CH 692510 décrivant un produit d'isolation phonique et thermique combiné associant une couche de mousse synthétique résistante à la compression et une couche de laine minérale, laine de verre ou laine de roche et sert d'isolant phonique, destiné à isoler une chape flottante, une dalle ou une toiture sur chevrons. Le document DE 4441646 décrit un procédé de fabrication d'une couverture pour balcons ou terrasses. Le système comprend un panneau en mousse rigide, revêtu sur ces deux faces d'un tissu pour assurer l'étanchéité, puis collé au support par une couche de mortier. Le document DE 8621064 décrit un système de jointage pour couverture comprenant des bandes étanches pour éviter les coulées entre les joints de matériaux peu visqueux et mobiles pour compenser les éventuels phénomènes de retrait ou déplacements. Ces bandes sont positionnées les unes sur les autres avec un chevauchement.

On cherche donc à trouver des solutions permettant de diminuer le plus possible les temps d'attente des carreleurs. C'est dans ce cadre que s'inscrit la présente invention qui propose un système qui assure à la fois l'étanchéité et l'isolation acoustique et qui puisse être positionné directement sous les carreaux de carrelage, sans nécessiter la pose d'aucune chape. Ce système permet de gagner du temps et donc de raccourcir notablement la durée totale des chantiers nécessitant la mise en œuvre de systèmes acoustiques et étanches avec une finition carrelée collée. Les propriétés en terme d'étanchéité et d'isolation acoustique de ce nouveau système sont équivalentes à celles des systèmes actuels d'isolation phonique sous chape combinés avec des solutions d'étanchéité, pour une épaisseur totale moindre étant donné qu'il n'est plus nécessaire de couler de chape entre la couche acoustique et la membrane d'étanchéité. Dans ce but, l'invention est définie par le système étanche d'isolation acoustique selon la revendication indépendante 1, ainsi que par un procédé de fabrication d'un sol carrelé selon la revendication 5 utilisant un tel système. Des modes de réalisation préférentiels sont définis dans les revendications dépendantes.

Un des objets de la présente invention est un système étanche d'isolation acoustique sous forme de plaques destiné à être positionné sur un support et directement sous des carreaux de carrelage. Ce système est constitué d'une plaque isolante couplée à une partie étanche, ladite plaque isolante étant composée d'une ou plusieurs couches solidaires les unes des autres.

Ladite plaque isolante comprend au moins une sous-couche souple et au moins une sous-couche rigide solidaire de la sous-couche souple et positionnée au regard des carreaux. La plaque isolante est la partie du système apportant l'isolation acoustique. Cette plaque est couplée à une seconde partie qui assure l'étanchéité.

De façon préférée, le système selon la présente invention est préfabriqué. Ainsi le couplage entre la plaque isolante et la partie étanche est réalisé lors de la fabrication du système, en usine. Le carreleur n'a donc pas besoin de réaliser l'association entre les deux parties sur le chantier, ce qui constitue également un gain de temps pour lui.

La partie étanche peut se présenter sous différentes formes.

Selon un premier mode de réalisation ne faisant pas partie de l'invention, la partie étanche est une feuille de matériau synthétique, par exemple en polyéthylène, de préférence d'une épaisseur inférieure à 2 mm, voire inférieure à 1 mm. Elle est avantageusement revêtue sur chaque face d'un matériau non tissé, tel qu'un non tissé en fibre de polypropylène. Ce revêtement permet avantageusement d'améliorer l'adhérence entre les différentes parties constitutives d'un système, notamment entre la partie étanche et la plaque isolante et également entre la partie étanche et le mortier colle qui est utilisé pour coller les carreaux. Elle est alors couplée avec la plaque isolante par thermo-soudage ou collage, de préférence avec une colle de type acrylique. Le couplage a lieu en usine. Il est réalisé avec les colles utilisées actuellement pour coller les couches acoustiques. On peut citer par exemple la colle weber.sys acoustic.

La partie étanche sous forme de feuille comprend au moins deux zones de débordement dépassant de la plaque isolante, ces zones étant situées sur la totalité de la longueur d'au moins deux cotés consécutifs de la plaque isolante. Ainsi le positionnement de ces zones de débordement permet d'assurer une continuité de l'étanchéité. Lors de la pose des différentes plaques sur le support à revêtir, la zone de débordement de la feuille d'étanchéité est positionnée de façon à faire un moyen de jointement avec la plaque isolante juxtaposée. Ainsi la zone de débordement d'une plaque est positionnée au-dessus du raccord existant entre deux plaques positionnées l'une à côté de l'autre et est collée sur la plaque adjacente. Il est important que ces zones de débordement soient continues pour ne pas créer de rupture d'étanchéité. Les zones de débordement sont collées sur les plaques avec différents systèmes tels que des mastics d'étanchéité ou des colles. Les dimensions relatives de la plaque isolante et de la membrane d'étanchéité sous forme de feuille sont telles qu'il est préférable lors du couplage des deux parties de prévoir des zones de débordement continues de la membrane d'étanchéité au-delà de la plaque isolante. A titre d'exemple, les dimensions de la plaque isolante sont de l'ordre de 1 m x 0,5 m, et les zones de débordement dépassent de la plaque isolante d'environ 5 à 10 cm.

Selon l'invention, l'étanchéité est apportée par traitement de la plaque isolante avec un produit d'étanchéité liquide ou pâteux, qui après séchage va apporter l'étanchéité nécessaire. Ce produit d'étanchéité est appliqué directement sur la sous-couche rigide de la partie isolante lors de la fabrication du système. La partie étanche est ainsi une membrane d'étanchéité obtenue après séchage d'un produit d'étanchéité liquide ou pâteux appliqué directement sur la sous-couche rigide de la partie isolante. L'épaisseur de la membrane après séchage est de moins de 2 mm, voire de l'ordre 1 mm. L'épaisseur de la membrane est ajustée lors de la fabrication du système isolant en fonction des préconisations imposées par le fabriquant. Les propriétés hydrofuges du produit d'étanchéité lui permettent de jouer le rôle d'un film d'étanchéité après séchage. Il peut par exemple être obtenu par mélange d'un produit bi-composant constitué du mélange d'une résine en dispersion et d'une poudre à base de liant hydraulique adjuvantée de matières synthétiques. On peut citer, comme exemple de produit d'étanchéité liquide ou pâteux, le produit commercial weber.tec superflex@ D2.

Dans ce système selon la présente invention qui comprend une membrane d'étanchéité obtenue à partir d'un produit d'étanchéité liquide ou pâteux, pour éviter de devoir placer entre chaque plaque du système selon l'invention des moyens de jointement, ce qui constituerait une étape supplémentaire à réaliser par le carreleur, la partie étanche comprend en outre une bande de membrane d'étanchéité sous forme de feuille couplée par collage à la plaque isolante, ces zones étant situées sur la totalité de la longueur d'au moins deux côtés consécutifs de la plaque isolante. Cette bande, dont la largeur totale est par exemple comprise entre 5 et 15 cm, est placée en bordure de la plaque et permet notamment de prévoir des zones de débordements au-delà de la plaque isolante pour assurer le jointement entre les différentes plaques du système selon la présente invention. La bande de membrane d'étanchéité sous forme de feuille est positionnée de façon continue sur la totalité de la longueur d'au moins deux cotés consécutifs de la plaque isolante. Au moins une partie de la bande est superposée sur la partie étanche obtenue après séchage du produit d'étanchéité pour assurer la continuité de la partie étanche sur l'ensemble de la plaque isolante. A titre d'exemple, la partie de la bande qui est collée sur la partie étanche de la plaque isolante représente une bande d'une largeur comprise entre 3 et 7 cm.

De façon avantageuse, pour permettre un stockage aisé des plaques du système selon la présente invention, les zones de débordement de la feuille d'étanchéité sont pré-pliées, de sorte que la dimension des plaques à stocker corresponde à la dimension de la partie isolante du système. La partie pré-pliée de la zone de débordement peut facilement être dépliée au moment de la pose de la plaque sur le chantier.

La sous-couche souple de la plaque isolante est constituée d'au moins un matériau fibreux d'origine minérale ou synthétique, du type fibres de verre et/ou fibres de polyester ou du type couche alvéolaire synthétique telle qu'en polyéthylène ou polyuréthane. La sous-couche est préférentiellement constituée d'un non-tissé synthétique cardé thermo-lié, aiguilleté ou non aiguilleté. Elle peut également être un non-tissé minéral obtenu par voie fondue. Elle peut encore être un matériau alvéolaire tel qu'une mousse synthétique, du type mousse polyuréthane. A titre d'exemple, la sous-couche souple est un non-tissé aiguilleté en fibres de polyester, ou un non-tissé en fibres de verre. Son épaisseur est comprise entre 2 et 10 mm.

La sous-couche rigide solidaire de la sous-couche souple et positionnée en regard des carreaux est à base de liant minéral, tel que du ciment, du gypse, du mortier, ou à base de bitume, ou de fibres agglomérées telles que des fibres végétales du type bois, chanvre, des fibres minérales du type laine de roche, ou à base de matière composite synthétique telle que des fibres synthétiques ou de la résine synthétique, ou encore à base d'un mélange de fibres et de résine. Cette sous-couche rigide a une épaisseur comprise entre 2 et 10 mm.

La sous-couche souple et la sous-couche rigide sont solidarisées entre elles lors du procédé de fabrication du système selon la présente invention, par exemple par collage par apport thermique ou à l'aide d'une colle. La manière de rendre ces deux sous-couches solidaires est adaptée en fonction du type de matériau de chacune des couches.

La présente invention porte également sur un procédé de fabrication d'un sol carrelé sur un support à revêtir comprenant les étapes suivantes :
a. positionnement et collage de plusieurs plaques du système selon l'invention les unes à côté des autres sans espacement sur ledit support ;
b. traitement des moyens de jointement pour assurer la continuité de l'étanchéité ;
c. application directe d'une colle à carrelage sur la partie étanche du système et
d. pose des carreaux de carrelage.

Plusieurs plaques du système selon la présente invention sont positionnées les unes à côté des autres, de sorte à recouvrir la totalité du support à revêtir. En fonction de la taille de chacune des plaques, le carreleur peut effectuer préalablement à la pose, des découpes de certaines plaques, afin d'obtenir les dimensions souhaitées.

Les plaques sont posées de sorte à ne pas laisser d'espacement entre elles pour limiter tout risque de défaut d'étanchéité ou d'isolation acoustique. Lorsque les plaques comprennent des zones de débordement pré-pliées, elles sont posées les unes à côté des autres, bord à bord, en maintenant les zones de débordement pré-pliées. Les zones de débordement ne seront dépliées le cas échéant qu'u moment de l'étape b) du procédé.

Dans le but de traiter l'étanchéité entre les différentes plaques, après l'étape a) de positionnement et de collage des plaques de système, un moyen de jointement est positionné au niveau de la partie jointive de deux plaques consécutives recouvrant le support.

Un moyen de jointement qui n'est pas en accord avec l'invention peut se présenter sous plusieurs formes. Il peut être une bande étanche que le carreleur colle au niveau de toutes les parties jointives. Il peut également être un liquide ou mastic d'étanchéité que le carreleur vient appliquer au niveau des parties jointives des différentes plaques. Dans ce dernier cas, il peut parfois être nécessaire de prévoir un temps de séchage du moyen de jointement avant de pouvoir appliquer la colle à carrelage. Le moyen de jointement peut comprendre à la fois un liquide ou mastic d'étanchéité appliqué entre les plaques et une bande étanche positionnée entre les plaques.

Selon l'invention, le moyen de jointement est directement intégré au système selon la présente invention et correspond aux zones de débordement de la membrane d'étanchéité sous forme de feuille dépassant de la plaque isolante et de préférence pré-pliées pour faciliter le stockage. Ainsi lors de la pose d'une plaque, la partie de la membrane d'étanchéité qui se présente sous forme d'une feuille et qui déborde de la plaque isolante est dépliée et positionnée de façon à recouvrir partiellement la plaque positionnée consécutivement et ainsi permet d'assurer l'étanchéité au niveau des jointures des différentes plaques. Avantageusement, la zone de débordement est collée sur la plaque adjacente après avoir été dépliée. Là encore, le moyen de jointement peut comprendre à la fois un liquide ou mastic d'étanchéité appliqué entre les plaques et sur lequel on vient ensuite positionner la zone de débordement.

Ainsi, les zones de débordement sont dépliées après la pose de la plaque à laquelle elles sont fixées de sorte à venir recouvrir une dimension (largeur et/ou longueur) d'une plaque adjacente. Si la plaque est posée directement le long d'un mur, sa zone de débordement peut être collée directement sur la partie inférieure du mur de façon à assurer l'étanchéité le long du mur.

L'ensemble des points singuliers de la surface à revêtir est traité, notamment par ajout d'une bande étanche de sorte à s'assurer que la totalité de la surface qui doit être recouverte de carreaux est étanche.

Après l'étape de positionnement des plaques et des moyens de jointements entre plaques adjacentes, le procédé selon l'invention comprend une étape d'application d'une colle à carrelage puis la pose des carreaux. L'utilisation du système étanche d'isolation acoustique qui apporte la rigidité suffisante permet avantageusement d'éviter de devoir appliquer une couche épaisse d'un mortier spécial jouant à la fois le rôle de mortier-colle pour les carreaux et de mortier de ragréage pour renforcer la rigidité. En fonction du système acoustique choisi, l'utilisation de certaines colles spécifiques peuvent être préconisées par le fabriquant.

L'étape c) du procédé selon l'invention est l'étape de pose des carreaux, qui est réalisée de façon usuelle par le carreleur. Après un temps de séchage d'environ 24 heures, un mortier de jointement est appliqué entre les carreaux.

D'autres détails avantageux sont décrits ci-après en regard des figures illustrant l'invention :
La figure 1 représente une vue en coupe d'une représentation schématique du système étanche d'isolation acoustique ne faisant pas partie de la présente invention.
La figure 2 représente une vue en coupe d'un sol revêtu de carreaux positionnés sur le système étanche d'isolation acoustique ne faisant pas partie de la présente invention.
La figure 3 représente une vue de dessus de quatre plaques du système étanche d'isolation acoustique ne faisant pas partie de la présente invention disposées les unes à côté des autres avec un moyen de jointement intégré au système.
La figure 4 représente une vue de dessus d'un système étanche d'isolation acoustique selon l'invention comprenant à la fois une membrane d'étanchéité obtenue à partir d'un système d'étanchéité liquide et une bande d'étanchéité intégrée au système.

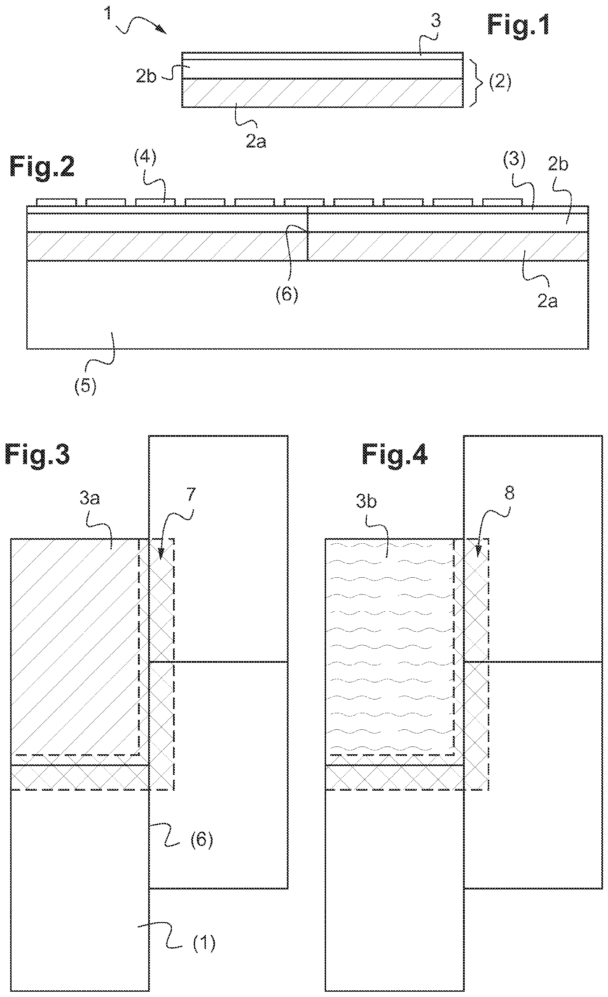

La vue en coupe représentée sur la figure 1 montre un système (1) étanche d'isolation acoustique ne faisant pas partie de la présente invention qui est constitué d'une plaque isolante (2) couplée à une partie étanche (3). La plaque isolante (2) comprend au moins deux sous-couches : la sous-couche (2a) est la sous couche souple apportant l'isolation acoustique et la sous-couche (2b) est la sous-couche rigide apportant la résistance mécanique au système. Le système (1) est destiné à être fixé par collage sur le sol à revêtir, par exemple au moyen d'une colle acrylique ou vinylique, comme montré sur la figure 2. Plusieurs plaques de système (1) sont collées sur le support à revêtir (5). Le raccord entre les deux plaques représentées est indiqué sous la référence (6). Selon le mode de réalisation illustré sur cette figure, la sous-couche souple (2a) est celle positionnée du côté du support (5), la sous-couche rigide (2b) étant celle en regard des carreaux de carrelage (4). Les carreaux (4) sont positionnés les uns à côté des autres, en laissant entre chacun un espace qui sera rempli par un mortier de jointement lors de la dernière étape du procédé de fabrication du sol carrelé. Sur la figure 2, la couche de mortier colle appliquée sur la partie étanche (3) et sous les carreaux (4) n'est pas représentée.

La figure 3 représente une vue de dessus de quatre plaques du système étanche ne faisant pas partie de la présente invention, positionnées les unes à côté des autres. La membrane (3a) d'étanchéité se présente sous forme d'une feuille collée sur la sous-couche rigide (2b) de la plaque isolante. La zone de débordement (7) de la feuille étanche (3a) n'est représentée sur la figure 3 que pour une seule plaque. La zone de débordement (7) n'est présente dans ce cas que sur deux côtés consécutifs de la plaque. Elle permet ainsi de recouvrir le raccord (6) et donc d'assurer l'étanchéité entre deux plaques consécutives. Elle est collée sur le raccord et sur la plaque adjacente.

La figure 4 représente une vue de dessus d'une plaque du système selon la présente invention dans lequel la membrane d'étanchéité (3b) a été obtenu à partir d'un composant liquide ou pâteux. Il est prévu d'associer ce type de membrane (3b) avec une bande (8) de membrane d'étanchéité se présentant sous forme de feuille, de façon à prévoir une zone de débordement identique à celle représentée sur la figure qui au moment de la pose est collée sur le raccord et sur une partie de la plaque adjacente pour assurer la continuité de l'étanchéité

Les performances acoustiques du système acoustique et étanche selon la présente invention sont au moins équivalentes aux performances du système acoustique seul sans la couche d'étanchéité. Ces performances sont notamment similaires à celles des systèmes acoustiques utilisés actuellement sur le marché pour la réalisation traditionnelle de ce type d'ouvrage aux propriétés acoustiques et étanches.
La valeur de l'indice d'affaiblissement ΔLw des bruits d'impact permet notamment de caractériser les performances d'isolation aux sons d'impact des systèmes sols (EN ISO 10140-3 et 717-2). Ainsi, les systèmes sous chape traditionnellement installés dans ce genre d'ouvrage ont un indice ΔLw compris entre 15 et 20 dB, voire jusqu'à 22 dB en cas d'épaisseur élevée de la chape coulée. A titre d'exemples de systèmes commerciaux, on peut citer les systèmes suivants:
- sous-couche weber.floor 4955 sous 40 mm de chape pour lequel l'indice ΔLw vaut 20 dB ;
- sous-couche Siplast Assour chape 19 sous 40 mm de chape pour lequel l'indice ΔLw vaut 19 dB,
- sous-couche Siplast Assour chape PLUS sous 40 mm de chape pour lequel ΔLw vaut 21 dB.
La réalisation de la mesure standardisée pour la caractérisation de l'indice d'affaiblissement ΔLw est lourde et couteuse. De ce fait, elle est réservée à un usage limité, principalement lors de la commercialisation d'un système acoustique. Par conséquent, des techniques permettant l'étalonnage des performances acoustiques plus adaptées à un processus de criblage sur un grand nombre de systèmes ont pu être mises en place et validées par la communauté acoustique. Le couplage d'une technique d'étalonnage et de quelques mesures standardisées correspondantes permet de manière rigoureuse et à moindre frais de classer de manière relative les performances d'un grand nombre de systèmes tout en s'informant de quels seraient leurs niveaux de performances absolues.

L'une de ces techniques comparatives d'étalonnage consiste à caractériser le rayonnement énergétique de dalles support en béton traitées par les systèmes sols à caractériser. La comparaison de la dalle traitée avec la dalle support en béton de référence permet d'évaluer de manière relative le gain d'isolation aux sons d'impact ∂L en dB et donc de réaliser le classement des systèmes étudiés selon leur performance. Dans les faits, des échantillons de dimensions avoisinant 500 x 500 mm sont suspendus en condition libre-libre (c'est-à-dire suspendus avec des tendeurs) et instrumentalisés sur la face arrière avec nombre suffisant d'accéléromètres. Des frappes au marteau d'impact sont opérées sur la face avant de l'échantillon. Les puissances rayonnées sont collectées par les accéléromètres. Un post-traitement des mesures consistant à réaliser la somme énergétique sur les bandes de tiers d'octave de fréquence 100 Hz à 3150 Hz permet de calculer le gain d'isolation relatif ∂L en dB des dalles traitées par rapport à la dalle support et par conséquent le classement des différents systèmes. Des tests opérés selon la méthode d'étalonnage comparative décrite ci-dessus sur des systèmes de référence pour lesquelles les valeurs d'isolement selon la méthode standardisée (effectué en organisme externe de certification) sont disponibles, ont permis d'établir un lien clair entre le classement des dits systèmes selon l'échelle relative en ∂L et l'échelle absolue en ΔLw.

Des tests d'étalonnage comparatif ont également été effectués sur des systèmes une fois recouverts de carreaux. Trois différents systèmes ont été testés :
- Le premier système testé (système 1) comprend une partie isolante dont la couche souple de 5 mm est à base de fibres de polyester aiguilleté et la sous-couche rigide de 3 mm est un aiguilleté de fibres synthétiques imprégnées de résine. La partie étanche est une membrane d'étanchéité sous forme de feuille collée sur la partie rigide, commercialisée sous le nom de weber.sys étanche. La feuille d'étanchéité est pré-collée avec une colle acrylique commercialisée sous le nom weber.sys acoustic.
- Le deuxième système testé (système 2) est identique au premier système au niveau de la partie isolante mais comprend une membrane d'étanchéité obtenue à partir d'un composant liquide, commercialisé sous le nom de weber.tec superflex D2.
- Le troisième système testé (système 3) est identique au premier à ceci près que la couche souple de la partie isolante a été remplacée par un voile de verre non tissé d'environ 3.5 mm et 300 g/m². La feuille d'étanchéité identique à celle du système 1 est pré-collée avec une colle acrylique commercialisée sous le nom weber.sys acoustic.

Le système de référence (système Ref) comprend une couche isolante dont la partie souple est à base de fibres de polyester et la partie rigide est un aiguilleté de fibres synthétiques imprégnées de résine, le système étant commercialisé sous la référence weber.sys impact.

Les résultats consignés dans le tableau 1 ci-dessous montrent clairement que les performances acoustiques du système 1, 2 ou 3 sont au moins équivalentes aux performances du système acoustique seul sans la couche d'étanchéité et similaires à celles des systèmes acoustiques utilisés actuellement sur le marché pour la réalisation traditionnelles de ce type d'ouvrage aux propriétés acoustique et étanche.

**Tableau 1**

| | Amélioration relative de l'isolation aux bruits d'impact selon méthode comparative d'étalonnage en dB |
|---|---|
| Référence | ∂L_{ref} |
| Système 1 | ∂L_{ref} +1 |
| Système 2 | ∂L_{ref}+3 |
| Système 3 | ∂L_{ref}+10 |

Le système selon la présente invention permet avantageusement de diminuer le temps d'attente du carreleur. L'exemple ci-dessous compare le temps de travail nécessaire pour déposer un carrelage sur un système isolant acoustique selon premier mode de réalisation (ne faisant pas partie de l'invention) et selon les procédés utilisés actuellement qui nécessite l'application d'une chape. Le temps de travail pour l'opérateur dans les deux systèmes étudiés reste équivalent.

Le temps de pose d'un revêtement de type carrelage sur un système d'isolation acoustique est estimé pour une pièce d'eau d'environ 5 m². Les différentes étapes sont détaillées dans le tableau 2 ci-dessous et le temps de chaque étape est estimé en heures. Le système de référence est un système d'isolation acoustique sous chape sur lequel on coule une chape, puis on applique deux couches successives d'un système d'étanchéité liquide avant d'appliquer les carreaux.

**Tableau 2**

| Système de référence | Temps en heure | Système selon | Temps en heure |
|---|---|---|---|
| | | le premier mode de réalisation | |
| Pose d'une bande périphérique | 0.25 | Pose d'une bande périphérique | 0.25 |
| Pose de la sous couche acoustique | 0.33 | Découpe et pose des plaques | 2.5 |
| Application de la chape | 1 | Traitement de l'étanchéité entre lés | 0.5 |
| *Délai de séchage de la chape* | 48 | | |
| Traitement de l'étanchéité des points singuliers périphériques | 1 | Traitement de l'étanchéité des points singuliers périphériques | 1 |
| Application de la première couche du système d'étanchéité liquide | 0.75 | | |
| *Délai de séchage* | 4 | | |
| Application de la seconde couche d'étanchéité | 0.75 | | |
| *Délai de séchage* | 6 | | |
| Application du mortier colle et pose du carrelage | 2 | Application du mortier colle et pose du carrelage | 2 |
| *Temps de séchage* | 24 | *Temps de séchage* | 24 |
| Application du mortier de joints et nettoyage | 1 | Application du mortier de joints et nettoyage | 1 |
| Temps de travail estimé | 7.08 | | 7.25 |
| Délais d'attente | 82 | | 24 |
| Temps total | 89.08 | | 31.25 |

## Revendications

1. Système (1) étanche d'isolation acoustique sous forme de plaques destiné à être positionné sur un support et directement sous carreaux de carrelage , ledit système (1) est constitué d'une plaque isolante (2) couplée à une partie étanche (3), ladite plaque isolante (2) étant composée d'une ou plusieurs couches solidaires les unes des autres, et en ce que ladite plaque isolante (2) comprend au moins une sous-couche souple (2a) et au moins une sous-couche rigide (2b) solidaire de la sous-couche souple (2a) et positionnée en regard des carreaux (4), la partie étanche (3) étant une membrane d'étanchéité (3b) obtenue après séchage d'un produit d'étanchéité liquide ou pâteux appliqué directement sur la sous-couche rigide (2b) de la partie isolante (2), **caractérisé en ce que** la partie étanche (3) comprend en outre une bande (8) de membrane d'étanchéité sous forme de feuille couplée par collage à la plaque isolante (2), ladite bande possédant au moins deux zones de débordement (7) dépassant de la plaque isolante (2), ces zones étant situées sur la totalité de la longueur d'au moins deux cotés consécutifs de la plaque isolante (2).

2. Système (1) selon la revendication 1 **caractérisé en ce qu'**il est préfabriqué.

3. Système (1) selon la revendication 1 **caractérisé en ce que** le produit d'étanchéité est obtenu par mélange d'un produit bicomposant constitué du mélange d'une résine en dispersion et d'une poudre à base de liant hydrauliques adjuvantée de matières synthétiques.

4. Système (1) selon la revendication 1 **caractérisé en ce que** les zones de débordement (7) sont pré-pliées de sorte que les dimensions du système soient celles de la plaque isolante (2).

5. Procédé de fabrication d'un sol carrelé sur un support (5) à revêtir **caractérisé en ce qu'**il comprend les étapes suivantes :
a. positionnement et collage de plusieurs plaques du système (1) selon l'une des revendications 1 à 4 les unes à côté des autres sans espacement sur ledit support (5);
b. traitement des moyens de jointement (6) pour assurer la continuité de l'étanchéité ;
c. application directe d'une colle à carrelage sur la partie étanche du système et
d. pose des carreaux de carrelage (4).

6. Procédé selon la revendication 5 **caractérisé en ce que** le moyen de jointement (6) est directement intégré au système selon l'une des revendications 3 ou 4 et correspond aux zones de débordement (7) de la membrane d'étanchéité sous forme de feuille dépassant de la plaque isolante (2) et pré-pliées, que l'on colle sur les plaques adjacentes après les avoir dépliées.

## Patentansprüche

1. Dichtes Schallisolierungssystem (1) in Form von Platten, das dazu bestimmt ist, auf einem Träger und direkt unter Fliesen positioniert zu werden, wobei das System (1) aus einer Isolierstoffplatte (2) besteht, die mit einem dichten Teil (3) gekoppelt ist, wobei die Isolierstoffplatte (2) aus einer oder mehreren miteinander fest verbundenen Schichten hergestellt ist, und wobei die Isolierstoffplatte (2) mindestens eine flexible Unterschicht (2a) und mindestens eine starre Unterschicht (2b), die mit der flexiblen Unterschicht (2a) fest verbunden ist und gegenüber den Fliesen (4) angeordnet ist, umfasst, wobei der dichte Teil (3) eine Dichtungsmembran (3b) ist, die nach einem Trocknen eines flüssigen oder pastösen Dichtungsmittels erhalten wird, das direkt auf die starre Unterschicht (2b) des Isolierstoffteils (2) aufgetragen wird,
**dadurch gekennzeichnet, dass** der dichte Teil (3) ferner einen Streifen (8) einer Dichtungsmembran in Form einer Folie umfasst, der durch Kleben mit der Isolierstoffplatte (2) gekoppelt ist, wobei der Streifen mindestens zwei Überlaufbereiche (7) besitzt, die aus der Isolierstoffplatte (2) herausragen, wobei diese Bereiche über der gesamten Länge von mindestens zwei aufeinanderfolgenden Seiten der Isolierstoffplatte (2) gelegen sind.

2. System (1) nach Anspruch 1, **dadurch gekennzeichnet, dass** es vorgefertigt ist.

3. System (1) nach Anspruch 1, **dadurch gekennzeichnet, dass** das Dichtungsmittel durch Mischen eines Zweikomponentenprodukts erhalten wird, das aus einer Mischung eines Dispersionsharzes und eines Pulvers auf Basis eines hydraulischen Bindemittels mit einem Zusatz von synthetischen Materialien besteht.

4. System (1) nach Anspruch 1, **dadurch gekennzeichnet, dass** die Überlaufbereiche (7) vorgefaltet sind, sodass die Abmessungen des Systems denen der Isolierstoffplatte (2) entsprechen.

5. Fertigungsverfahren für einen gefliesten Boden auf einem zu bedeckenden Träger (5), **dadurch gekennzeichnet, dass** es die folgenden Schritte umfasst:
a. Positionieren und Verkleben mehrerer Platten des Systems (1) nach einem der Ansprüche 1 bis 4 nebeneinander ohne Zwischenraum auf dem Träger (5);
b. Behandeln der Verbindungsmittel (6) zum Sicherstellen der Kontinuität der Dichtung;
c. direktes Auftragen von Fliesenkleber auf den dichten Teil des Systems und
d. Verlegen von Fliesen (4).

6. Verfahren nach Anspruch 5, **dadurch gekennzeichnet, dass** das Verbindungsmittel (6) direkt in das System nach einem der Ansprüche 3 oder 4 integriert wird und den Überlaufbereichen (7) der Dichtungsmembran in Form einer Folie, die aus der Isolierstoffplatte (2) herausragen und vorgefaltet sind, die mit den angrenzenden Platten nach dem Entfalten verklebt werden, entspricht.

## Claims

1. A sealing soundproofing system (1) in the form of boards intended to be positioned on a substrate and directly under floor tiles, said system consists of an insulating board (2) coupled to a sealing part (3), said insulating board (2) consisting of one or more layers fastened to one another, and in that said insulating board (2) comprises at least one flexible sub-layer (2a) and at least one rigid sub-layer (2b) attached to the flexible sub-layer (2a) and positioned facing the tiles (4), the sealing part (3) being a sealing membrane (3b) obtained after drying of a liquid or paste sealing product applied directly to the rigid sub-layer (2b) of the insulating part (2), **characterized in that** the sealing part (3) further comprises a sealing membrane tape (8) in the form of a film coupled by gluing to the insulating board (2), said tape having at least two overlap zones (7) extending beyond the insulating board (2), those zones being situated on the entirety of the length of at least two consecutive sides of the insulating plate (2).

2. The system (1) as claimed in claim 1, **characterized in that** it is prefabricated.

3. The system (1) as claimed in claim 1, **characterized in that** the sealing product is obtained by mixing a two-component product consisting of a mixture of a dispersed resin and a powder based on hydraulic binder with synthetic material additives.

4. The system (1) as claimed in claim 1, **characterized in that** the overlap zones (7) are pre-folded so that the dimensions of the system are those of the insulating board (2).

5. A method of fabricating a tile floor on a substrate (5) to be coated, **characterized in that** it comprises the following steps:
a. positioning and gluing a plurality of boards of the system (1) as claimed in any one of claims 1 to 4 alongside one another without gaps on said substrate (5);
b. treating the sealing means (6) to provide a continuous seal;
c. direct application of a tile adhesive to the sealing part of the system; and
d. laying the flooring tiles (4).

6. The method as claimed in claim 5, **characterized in that** the jointing means (6) are directly integrated into the system as claimed in either one of claims 3 or 4 and correspond to the overlap zones (7) of the sealing membrane in the form of a film extending beyond the insulating board (2) and pre-folded that are stuck to the adjacent boards after unfolding them.
